# EUROPEAN PATENT APPLICATION

(11) **EP 4 640 555 A1**
(43) Date of publication of application: **29.10.2025**
(21) Application number: 24315204.8
(22) Date of filing: 22.04.2024
(51) Int. Cl.: B64C 11/44, B64C 11/40, B64D 31/00, B64C 11/38, B64D 27/10, B64C 11/30

(54) **PROPELLER PROPULSION SYSTEMS**

(71) Applicant: Ratier-Figeac SAS, 46101 Figeac Cedex (FR)
(72) Inventor: BOCHE, Adele, Albiac (FR); BOULOC, Romain, Figeac (FR)
(74) Representative: Dehns

(57) **Abstract**

A propeller propulsion system (500) is provided comprising a prime mover comprising at least one spool (330), a propeller (304) arranged to be driven by the spool, a pitch adjustment subsystem (508) comprising an electronic control unit (602) and an electronic protection unit (604), a prime mover speed sensor (512) arranged to detect a rotation speed of the spool; and an additional speed sensor (514) arranged to detect the rotation speed of the spool or arranged to detect a rotation speed of the propeller. A first of the electronic control unit (602) and the electronic protection unit (604) is arranged to use an output (N2_A, N2_B) from the prime mover speed sensor (512) to determine the rotation speed of the propeller; and a second of the electronic control unit (602) and the electronic protection unit (604) is arranged to use an output (NP_A, NP_B) from the additional speed sensor (514) to determine the rotation speed of the propeller.

## Description

### Technical Field

The present disclosure relates to propeller propulsion systems.

### Background

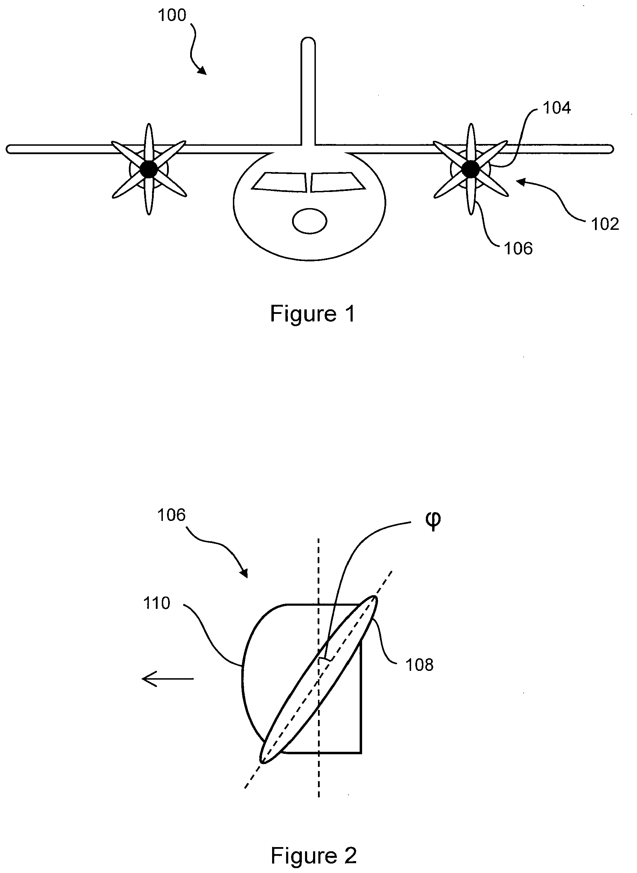

Aircraft are commonly powered by one or more propellers, e.g., driven by turbine engines (turboprop aircraft). Figure 1 shows an example of a propeller aircraft 100 that comprises two propeller propulsion systems 102. Each propeller propulsion system 102 comprises a prime mover 104 and a propeller 106. The prime movers 104 drive the propellers 106 to rotate and provide thrust to the aircraft 100. The prime movers 104 may, for instance, be turbine engines, piston engines, hybrid engines or electric motors.

Propeller propulsion systems, such as those used by the aircraft illustrated in Figure 1, often utilise variable-pitch propellers. Figure 2 illustrates a variable-pitch propeller 106 in cross section. A plurality of blades 108 are fixed to a rotating propeller hub 110, and the pitch φ of the blades 108 (i.e. the blade angle of each blade) can be adjusted (e.g. via hydraulic, electric or mechanical actuation) to allow the angle of attack of the blade relative to the oncoming airflow to be varied.

For example, the blade pitch can be adjusted from a feather position with φ at or near 90° (i.e. with the blades 108 parallel or near-parallel to the axis of rotation of the propeller 106, e.g. to minimise drag) to a fine pitch with lower values of φ. In some cases the pitch can decrease further to a reverse position that for providing reverse thrust.

The propeller pitch may be controlled during operation, e.g. to maintain an optimum pitch for the thrust required in each phase of flight. The pitch control is based at least partially on the speed at which the propeller is rotating N_{P}. In modern systems, pitch control is typically done by an electronic control unit, which receives measurements of N_{P} from a propeller speed sensor.

In addition to normal propeller pitch control, propeller propulsion systems also typically include a protection unit that can control the pitch to protect against hazardous failures, e.g. unexpected pitch changes towards low pitch values or rotational propeller over-speeds. This protection functionality is also typically provided electronically. A second separate propeller speed sensor provides feedback on N_{P} to the protection unit to keep the control and protection parts independent.

The need to provide multiple independent pitch control systems can disadvantageously increase component count, cost and weight. An improved approach may be desired.

### Summary

According to a first aspect of the present disclosure there is provided a propeller propulsion system comprising:
a prime mover comprising at least one spool;
a propeller arranged to be driven by the spool;
a pitch adjustment subsystem comprising an electronic control unit arranged to adjust a pitch of the propeller in normal operation and an electronic protection unit arranged to adjust the pitch of the propeller in response to one or more protection conditions;
a prime mover speed sensor arranged to detect a rotation speed of the spool; and
an additional speed sensor arranged to detect the rotation speed of the spool or arranged to detect a rotation speed of the propeller;

wherein a first of the electronic control unit and the electronic protection unit is arranged to use an output from the prime mover speed sensor to determine the rotation speed of the propeller;
and wherein a second of the electronic control unit and the electronic protection unit is arranged to use an output from the additional speed sensor to determine the rotation speed of the propeller.

Thus, it will be recognised by those skilled in the art that, because at least one of the electronic control unit and the electronic protection unit uses a prime mover speed sensor to determine the rotation speed of the propeller, the overall number of sensors required may be reduced. However, because the other of the electronic control unit and the electronic protection unit uses the additional speed sensor to determine the rotation speed of the propeller, the independence of the two units is maintained.

The inventors have recognised a prime mover speed sensor may advantageously be re-used to provide propeller speed information, because there is an inherent relationship between the speed of a prime mover and the speed of a propeller driven by that prime mover. Moreover, because prime mover speeds are often much higher than propeller speeds, using a detected prime mover spool speed to determine the propeller speed may result in a more accurate result than measuring the propeller speed directly. This effect may be particularly apparent at low speeds.

The propeller may be coupled directly to the spool, so that the propeller rotates at the same speed as the spool (direct drive). Alternatively, the propeller may be coupled to the spool by speed reduction apparatus (e.g. a gearbox), so that the propeller is arranged to rotate at a lower speed than the spool. The speed reduction apparatus may be arranged to provide a reduction ratio of at least 1.5:1, at least 2:1, at least 5:1 or at least 10:1. Determining the rotation speed of the propeller using an output from the prime mover speed sensor (and from the additional speed sensor when it is also arranged detect the rotation speed of the spool) may comprise scaling the rotation speed of the spool detected by the prime mover speed sensor (or the additional speed sensor) according to the reduction ratio of the speed reduction apparatus.

The electronic control unit may be arranged adjust the pitch of the propeller based at least partially on the rotation speed of the propeller. For instance, the electronic control unit may adjust the pitch to achieve a desired thrust based on the current propeller rotation speed. Additionally or alternatively, the electronic control unit may adjust the pitch to maintain a desired propeller rotation speed (e.g. using the rotation speed in a feedback loop).

The electronic protection unit may be arranged to adjust the pitch of the propeller according to one or more protection conditions relating to the rotation speed of the propeller. In a set of examples, the electronic protection unit may be arranged to adjust the propeller pitch to avoid or rectify a propeller over-speed condition, e.g. to increase the propeller pitch if the rotation speed of the propeller reaches or exceeds an over-speed threshold.

In a set of examples, the electronic protection unit is arranged to adjust the pitch of the propeller to avoid or rectify a low pitch condition, e.g. to increase the propeller pitch if the propeller pitch reaches or drops below a threshold.

In some examples, the prime mover comprises a combustion engine (e.g. a turbine engine or a piston engine). Alternatively, the prime mover may comprise an electric motor. In a set of examples, the prime mover comprises a turbine engine. In such examples the propeller propulsion system may be described as a turboprop engine system.

In examples where the prime mover is a turbine engine, the turbine engine may be a single-spool engine, in which compressor(s) and turbine(s) share a common spool and have the same rotation speed. In such examples, the prime mover speed sensor is arranged to detect the rotation speed of the single spool.

However, in some examples, the turbine engine comprises multiple spools, such as a low pressure spool (e.g. coupled to a low pressure compressor and/or a low pressure turbine) and a high pressure spool (e.g. coupled to a high pressure compressor and a high pressure turbine). The low and high pressure spools can rotate at different speeds, e.g. to allow for more optimal operation of both portions. The turbine engine may comprise one or more intermediate pressure spools arranged to operate at an intermediate pressure between the low and high pressure spools.

In some examples, the propeller is arranged to be driven by a low pressure spool. In some examples, the prime mover speed sensor (and potentially the additional speed sensor) is arranged to detect the rotation speed of the low pressure spool. Of course, in such examples, the propeller propulsion system may also comprise a prime mover speed sensor that detects the speed of the high pressure spool (e.g. for engine control purposes).

In a set of examples, the additional speed sensor is also a prime mover speed sensor arranged to detect the rotation speed of the spool. It will be appreciated that, in such examples, propeller speed information that is derived from the prime mover rather than measured directly is used for both normal pitch control and protection. In other words, no propeller speeds sensors may be required at all to provide independent pitch control and protection. However, the presence of one or more propeller speed sensors is not necessarily excluded in such examples (e.g. for other purposes).

In a set of examples, the additional speed sensor is a propeller speed sensor arranged to detect a rotation speed of the propeller. In such examples, pitch control and protection may be performed using propeller speed information that is determined in different ways. This may still allow the overall number of sensors to be reduced (as two independent propeller speed sensors may not be needed). Sensing two different propulsion system components (i.e. the propeller and the spool) to provide input for pitch control and protection may, in some examples, provide additional resilience against failures (e.g. as the likelihood of both sensors being disabled by one failure may be reduced, for instance due to increased physical separation of the sensors).

The pitch adjustment subsystem may comprise a hydraulic actuator for adjusting the pitch of the propeller.

The propeller propulsion system may comprise a prime mover control subsystem arranged to control one or more operational parameters of the prime mover (e.g. fuel flow to a combustion engine). The prime mover control subsystem may comprise an electronic prime mover control unit arranged to adjust one or more operational parameters of the prime mover in normal operation and an electronic prime mover protection unit arranged to adjust one or more operational parameters of the prime mover in response to one or more protection conditions.

The prime mover control subsystem may control the prime mover based at least partially on the rotation speed of the spool.

In a set of examples, the electronic prime mover control unit may control one or more operational parameters of the prime mover to achieve or maintain a desired spool rotation speeds (e.g. using the determined spool speed in a feedback loop). For instance, the electronic prime mover control unit may control fuel flow into a combustion engine or electric energy flow into an electric motor to achieve or maintain a desired spool rotation speed.

In a set of examples, the electronic prime mover protection unit may control one or more operational parameters relating to the rotation speed of the spool. For instance, the electronic prime mover protection unit may control one or more operational parameter (e.g. fuel or electric energy flow) to avoid or rectify a spool, over-speed or under-speed condition.

In some examples, the prime mover control subsystem (e.g. the electronic prime mover control unit or the electronic prime mover protection unit thereof) may use an output from the prime mover speed sensor to determine the rotation speed of the spool. In some examples, additionally or alternatively, the prime mover control subsystem (e.g. the electronic prime mover control unit or the electronic prime mover protection unit thereof) may use an output from the additional speed sensor to determine the rotation speed of the spool. In other words, the prime mover control subsystem and the pitch adjustment subsystem may share use of at least one speed sensor. In examples where the additional speed sensor is a propeller speed sensor, the prime mover control subsystem (e.g. the electronic prime mover control unit or the electronic prime mover protection unit thereof) may be arranged to determine the rotation speed of the spool by scaling the rotation speed of the propeller detected by the additional speed sensor according to the reduction ratio of speed reduction apparatus.

In a set of examples, a first of the electronic prime mover control unit and the electronic prime mover protection unit is arranged to use an output from the prime mover speed sensor to determine the rotation speed of the spool, and a second of the electronic prime mover control unit and the electronic prime mover protection unit is arranged to use an output from the additional speed sensor to determine the rotation speed of the spool. In other words, the pitch adjustment subsystem and the prime mover control subsystem may share both speed sensors. It will be recognised that, in such examples, independent propeller and prime mover control and protection may be achieved using only two rotation speed sensors.

However, this is not essential. In some examples, the propeller propulsion system comprises a separate dedicated speed sensor that provides speed information to only the prime mover control subsystem. In such examples, the prime mover speed sensor and/or the additional speed sensor may provide speed information to only the pitch adjustment system. The dedicated speed sensor may comprise a prime mover speed sensor or a propeller speed sensor.

The inventors consider the use of a propeller speed sensor to provide speed information to a prime mover control subsystem in a propeller propulsion system to be independently inventive and thus from a second aspect of the present disclosure there is provided a propeller propulsion system comprising:
a prime mover comprising at least one spool;
a propeller arranged to be driven by the spool;
a prime mover control subsystem comprising an electronic prime mover control unit arranged to adjust one or more prime mover parameters in normal operation and an electronic prime mover protection unit arranged to adjust one or more prime mover parameters in response to one or more protection conditions;
a propeller speed sensor arranged to detect a rotation speed of the propeller; and
an additional speed sensor arranged to detect a rotation speed of the spool or the rotation speed of the propeller;
wherein a first of the electronic prime mover control unit and the electronic prime mover protection unit is arranged to use an output from the prime mover speed sensor to determine the rotation speed of the spool, and a second of the electronic prime mover control unit and the electronic prime mover protection unit is arranged to use an output from the additional speed sensor to determine the rotation speed of the low pressure spool.

Because at least one of the electronic prime mover control unit and the electronic engine protection unit uses a propeller speed sensor to determine the rotation speed of the spool, the overall number of sensors required may be reduced. However, because the other of the electronic prime mover control unit and the electronic prime mover protection unit uses the additional speed sensor to determine the rotation speed of the spool, independence between the two units is maintained.

Using a propeller speed sensor to provide prime mover speed information may also lower costs, as a propeller speed sensor may be built to lower technical requirements than a prime mover speed sensor. For instance, a propeller speed sensor may need to measure lower speeds than a prime mover speed sensor and/or resist gentler operational conditions than a prime mover speed sensor (e.g. by virtue of being located further away from high temperature regions of a turbine engine). Propeller speed sensors may also be generally more accessible for maintenance or inspection than prime mover speed sensors.

Moreover, many rotational speed sensors operate by detecting whenever a point on the rotating object passes by a fixed point, and measuring the time taken for one or more detections to occur (i.e. corresponding to one or more revolutions). When such a sensor is used to determine propeller rotation speed, the detections can also provide a useful indication of the position of the propeller blades, because their position is fixed relative to the detection point. This information can be particularly useful for multi-propeller implementations (e.g. multi-engine aircraft), where it may be used to control the propellers to have dissimilar orientations as they rotate to avoid undesirable noise and vibrations (synchrophasing). Propeller blade position information can also be useful for propeller dynamic balancing, i.e. to assist with positioning a mass to suppress propeller dynamic imbalance.

In contrast, when such a rotation speed sensor is used to measure a higher prime mover spool rotation speed, multiple detections will occur for each complete revolution of the propeller (because the detection point on the rotating spool will pass the fixed point multiple times for each rotation of the propeller), making them less useful for determining blade orientation information. It is possible to use spool rotation information to determine propeller blade positions (e.g. to help with synchrophasing), but it can be expensive to implement.

The propeller propulsion system according to the second aspect may comprise a pitch adjustment subsystem as in examples of the first aspect described above, i.e. comprising an electronic control unit arranged to adjust a pitch of the propeller in normal operation and an electronic protection unit arranged to adjust the pitch of the propeller in response to one or more protection conditions.

The pitch adjustment subsystem (e.g. the electronic control unit or the electronic protection unit thereof) may control a pitch of the propeller based at least partially on the rotation speed of the propeller.

In some examples, the pitch adjustment subsystem (e.g. the electronic control unit or the electronic protection unit thereof) may use an output from the propeller speed sensor to determine the rotation speed of the propeller. In some examples, additionally or alternatively, the pitch adjustment subsystem (e.g. the electronic control unit or the electronic protection unit thereof) may use an output from the additional speed sensor to determine the rotation speed of the propeller. In examples where the additional speed sensor is a prime mover speed sensor, the pitch adjustment subsystem (e.g. the electronic control unit or the electronic protection unit thereof) may be arranged to determine the rotation speed of the propeller by scaling the rotation speed of the prime mover detected by the additional speed sensor according to the reduction ratio of the speed reduction apparatus.

In a set of examples, a first of the electronic control unit and the electronic protection unit is arranged to use an output from the propeller speed sensor to determine the rotation speed of the propeller, and a second of the electronic control unit and the electronic protection unit is arranged to use an output from the additional speed sensor to determine the rotation speed of the propeller.

In some examples, the propeller propulsion system comprises a separate dedicated speed sensor that provides speed information to only the pitch adjustment subsystem. In such examples, the propeller speed sensor and/or the additional speed sensor may provide speed information to only the prime mover control system. The dedicated speed sensor may comprise a prime mover speed sensor or a propeller speed sensor.

The rotation speed sensors used in examples of the present disclosure (i.e. propeller speed sensor(s) and prime mover speed sensor(s)) may be of any type suitable type known in the art *per se.* For instance, one or more of the speed sensors may comprise a magnetic pulse pick up sensor, e.g. in which a fixed sensor detects passes of a magnet coupled to the rotating object.

One, some or all of the rotation speed sensors may be simplex sensors, i.e. with a single sensing channel. However, in some examples one or more of the sensors comprises a duplex sensor, with two separate sensing channels (e.g. with two separate sensing elements). In examples that utilise one or more duplex sensors, the electronic control unit(s) and/or electronic protection unit(s) that use said sensors may also be duplex (i.e. with two redundant control or protection channels). In some examples, one or more of the sensors comprises a triplex sensor, for additional redundancy. In some examples, two simplex sensors may be used in place of a single duplex sensor, e.g. with four simplex sensors overall.

The control and protection units used in examples of the present disclosure may comprise any appropriate electronic controller hardware and software known in the art *per se,* e.g. comprising a memory storing suitable software, a processor arranged to execute said software and one or more inputs and outputs.

The present disclosure extends to an aircraft comprising one or more propeller propulsion systems as disclosed herein.

Features of any aspect or example described herein may, wherever appropriate, be applied to any other aspect or example described herein. Where reference is made to different examples, it should be understood that these are not necessarily distinct but may overlap. It will be appreciated that all of the preferred features of the propeller propulsion system disclosed with reference to the first aspect above may also apply, where appropriate, to the propeller propulsion system of the second aspect.

### Detailed Description

One or more non-limiting examples will now be described, by way of example only, and with reference to the accompanying figures in which:
Figure 1 is a schematic diagram of a propeller aircraft;
Figure 2 is a schematic diagram of a propeller of the aircraft;
Figure 3 is a schematic diagram of a conventional propeller propulsion system;
Figure 4 is a schematic diagram of illustrating part of the propeller propulsion system of Figure 3 in more detail;
Figure 5 is a schematic diagram of a propeller propulsion system according to a first example of the present disclosure;
Figure 6 is a schematic diagram of illustrating part of the propeller propulsion system of Figure 5 in more detail;
Figure 7 is a schematic diagram of a propeller propulsion system according to a second example of the present disclosure;
Figure 8 is a schematic diagram of illustrating part of the propeller propulsion system of Figure 7 in more detail;
Figure 9 is a schematic diagram of a propeller propulsion system according to a third example of the present disclosure; and
Figure 10 is a schematic diagram of illustrating part of the propeller propulsion system of Figure 9 in more detail.

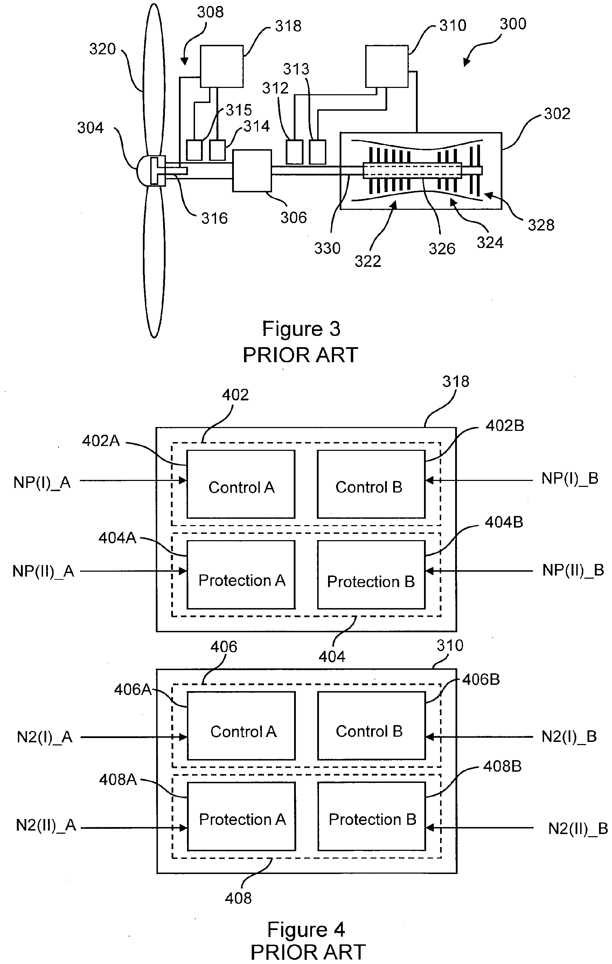

Figure 3 shows a conventional propeller propulsion system 300. The propeller propulsion system 300 comprises a turbine engine 302 and a propeller 304, coupled together by a gearbox 306.

The propeller propulsion system 300 also comprises a pitch adjustment subsystem 308, an engine control and protection subsystem 310, first and second engine speed sensors 312, 313 and first and second propeller speed sensors 314, 315. The engine speed sensors 312, 313 and the propeller speed sensors 314, 315 are duplex sensors, i.e. with two sensing channels each.

The pitch adjustment subsystem 308 comprises a hydraulic actuator 316 and a controller 318. The propeller 304 has a plurality of blades 320, and the hydraulic actuator 316 is operable to adjust the pitch of the blades under the control of the controller 318.

The propeller 304 is driven to rotate by the turbine engine 302. The turbine engine 302 comprises a high pressure compressor 322 and a high pressure turbine 324 coupled by a high pressure spool 326, and a low pressure turbine 328 coupled to a low pressure spool 330. The low pressure spool 330 drives the propeller 304 via the gearbox 306.

The engine speed sensors 312, 313 detect the rotation speed of the low pressure spool 330. The propeller speed sensors 314, 315 detect the rotation speed of the propeller 304. The gearbox 306 reduces the rotation speed of the low pressure spool 330 to the rotation speed of the propeller 304 (e.g. with a reduction ratio of ~1 :10), but the rotation of the low pressure spool 330 is nevertheless inherently linked to the rotation of the propeller 304.

The engine control and protection subsystem 310 controls operation of the turbine engine 302, e.g. by controlling fuel flow to the engine 302.

The pitch adjustment controller 318 and the engine control and protection subsystem 310 are shown in more detail in Figure 4.

The pitch adjustment controller 318 comprises an electronic control unit 402 and an electronic protection unit 404. The electronic control unit 402 and the electronic protection unit 404 can each independently command the hydraulic actuator 316 to control the pitch of the propeller blades 320. There are two redundant control unit channels 402A, 402B and two redundant protection unit channels 404A, 404B.

The engine control and protection subsystem 310 comprises an electronic engine control unit 406 and an electronic engine protection unit 408. The electronic engine control unit 406 and the electronic engine protection unit 408 can each independently control one or more engine parameters (e.g. fuel flow rate). There are two redundant electronic engine control unit channels 406A, 406B and two redundant electronic engine protection unit channels 408A, 408B.

The electronic control unit 402 of the pitch adjustment controller 318controls the pitch of the propeller 304 during normal operation (e.g. in response to pilot commands). For instance, the electronic control unit 402 may be used to effect changes in propeller pitch 304 needed for different performance requirements in different phases of flight.

In contrast, the electronic protection unit 404 of the pitch adjustment controller 318 controls the pitch of the propeller 304 in response to protection conditions such as propeller over-speeds or unexpected pitch movement towards low values.

Proper operation of both the electronic control unit 402 and the electronic protection unit 404 of the pitch adjustment controller 318may rely on up-to-date information on the rotation speed of the propeller 304.

The electronic control unit 402 uses the output from the first propeller speed sensor 314 to determine the rotation speed of the propeller and make appropriate pitch adjustments. A propeller speed signal NP(I)_A from the "A" channel of the first propeller speed sensor 314 is sent to the "A" channel of the electronic control unit 402A, and a propeller speed signal NP(I)_B from the "B" channel of the first propeller speed sensor 314 is sent to the "B" channel of the electronic control unit 402B.

The electronic protection unit 404 uses the output from the second propeller speed sensor 315 to determine the rotation speed of the propeller and make appropriate pitch adjustments if needed for protection reason. A propeller speed signal NP(II)_A from the "A" channel of the second propeller speed sensor 315 is sent to the "A" channel of the electronic protection unit 404A, and a propeller speed signal NP(II)_B from the "B" channel of the second propeller speed sensor 315 is sent to the "B" channel of the electronic protection unit 404B.

Using different propeller speed sensors 314, 315 ensures the independence of the pitch control and protection systems.

Correspondingly, proper operation of the electronic engine control unit 406 and the electronic engine protection unit 408 of the engine control and protection subsystem 310 relies on up-to-date information on the rotation speed of the low pressure spool 330.

The electronic engine control unit 406 uses the output from the first engine speed sensor 312 to determine the rotation speed of the low pressure spool 330 and make engine control adjustments. A low pressure spool speed signal N2(I)_A from the "A" channel of the first engine speed sensor 312 is sent to the "A" channel of the electronic engine control unit 406A, and a low pressure spool speed signal N2(I)_B from the "B" channel of the first engine speed sensor 312 is sent to the "B" channel of the electronic engine control unit 406B.

The electronic engine protection unit 408 uses the output from the second engine speed sensor 313 to determine the rotation speed of the low pressure spool 330 and make engine control adjustments. A low pressure spool speed signal N2(II)_A from the "A" channel of the second engine speed sensor 313 is sent to the "A" channel of the electronic engine protection unit 408A, and a low pressure spool speed signal N2(II)_B from the "B" channel of the second engine speed sensor 313 is sent to the "B" channel of the electronic engine protection unit 408B.

Using different engine spool speed sensors 312, 313 ensures the independence of the engine control and protection systems.

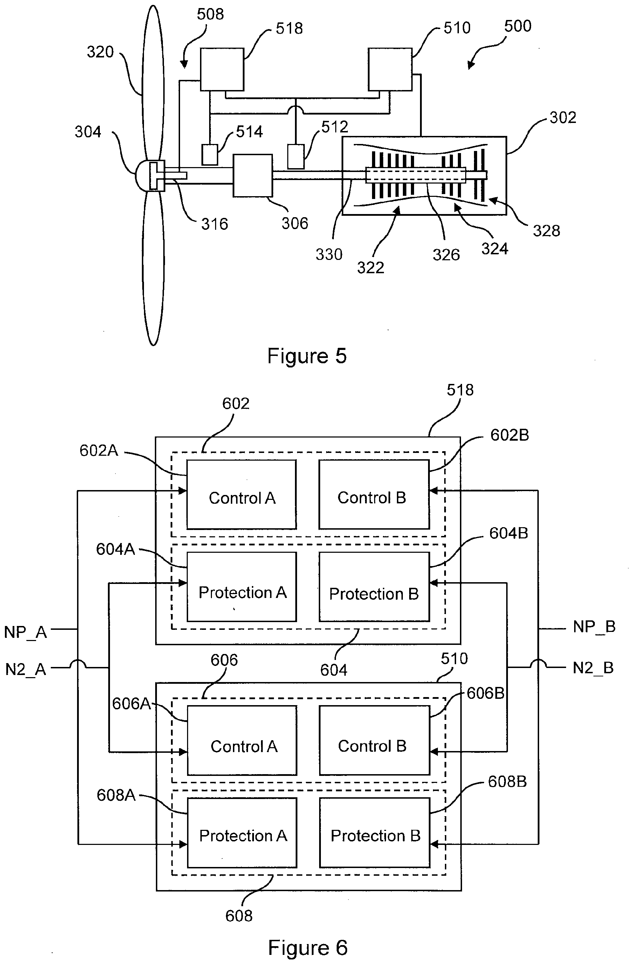

Figure 5 shows a propeller propulsion system 500 according to an example of the present disclosure. The propeller propulsion system 500 comprises a turbine engine 302 and a propeller 304, coupled together by a gearbox 306. In other examples, a different prime mover may be used in place of the turbine engine 302, e.g. a piston engine or an electric motor.

The propeller propulsion system 500 also comprises a pitch adjustment subsystem 508, an engine control and protection subsystem 510, an engine speed sensor 512 and a propeller speed sensor 514. Both the engine speed sensor 512 and the propeller speed sensor 514 are duplex sensors, i.e. with two sensing channels each. In other examples, simplex sensors may be used.

The pitch adjustment subsystem 508 comprises a hydraulic actuator 316 and a controller 518. The propeller 304 has a plurality of blades 320, and the hydraulic actuator 316 is operable to adjust the pitch of the blades under the control of the controller 518. In other examples, electric and/or mechanical pitch adjustment systems may be used.

The propeller 304 is driven to rotate by the turbine engine 302. The turbine engine 302 comprises a high pressure compressor 322 and a high pressure turbine 324 coupled by a high pressure spool 326, and a low pressure turbine 328 coupled to a low pressure spool 330. The low pressure spool 330 drives the propeller 304 via the gearbox 306. In other examples, the turbine engine 302 may have one or more intermediate pressure spools (e.g. connected to an intermediate pressure compressor and/or turbine).

The engine speed sensor 512 detects the rotation speed of the low pressure spool 330. The propeller speed sensor 514 detects the rotation speed of the propeller 304. The gearbox 306 reduces the rotation speed of the low pressure spool 330 to the rotation speed of the propeller 304 (e.g. with a reduction ratio of ~1:10), but the rotation of the low pressure spool 330 is nevertheless inherently linked to the rotation of the propeller 304.

The engine control and protection subsystem 510 controls operation of the turbine engine 302, e.g. by controlling fuel flow to the engine 302.

The pitch adjustment controller 518and the engine control and protection subsystem 510 are shown in more detail in Figure 6.

The pitch adjustment controller 518 comprises an electronic control unit 602 and an electronic protection unit 604. The electronic control unit 602 and the electronic protection unit 604 can each independently command the hydraulic actuator 316 to control the pitch of the propeller blades 320. There are two redundant control unit channels 602A, 602B and two redundant protection unit channels 604A, 604B. In other examples one or both of the control and protection units 602, 604 may have only one channel (e.g. when simplex speed sensors are used).

The engine control and protection subsystem 510 comprises an electronic engine control unit 606 and an electronic engine protection unit 608. The electronic engine control unit 606 and the electronic engine protection unit 608 can each independently control one or more engine parameters (e.g. fuel flow rate). There are two redundant electronic engine control unit channels 606A, 606B and two redundant electronic engine protection unit channels 608A, 608B.

The electronic control unit 602 of the pitch adjustment controller 518 controls the pitch of the propeller 304 during normal operation (e.g. in response to pilot commands). For instance, the electronic control unit 602 may be used to effect changes in propeller pitch 304 needed for different performance requirements in different phases of flight.

In contrast, the electronic protection unit 604 of the pitch adjustment controller 518 controls the pitch of the propeller 304 in response to protection conditions such as propeller over-speeds or unexpected pitch movement towards low values.

Proper operation of both the electronic control unit 602 and the electronic protection unit 604 of the pitch adjustment controller 518 may rely on up-to-date information on the rotation speed of the propeller 304.

The electronic control unit 602 uses the output from the propeller speed sensor 514 to determine the rotation speed of the propeller and make appropriate pitch adjustments. A propeller speed signal NP_A from the "A" channel of the propeller speed sensor 514 is sent to the "A" channel of the electronic control unit 602A, and a propeller speed signal NP_B from the "B" channel of the propeller speed sensor 514 is sent to the "B" channel of the electronic control unit 602B. The propeller speed signals NP_A, NP_B may comprise digital signals in which the propeller rotation speed is encoded, or analogue signals from which the propeller rotation speed can be determined.

In contrast, the electronic protection unit 604 uses the output from the engine speed sensor 512 to determine the rotation speed of the propeller and make appropriate pitch adjustments if needed for protection reasons.

A low pressure spool speed signal N2_A from the "A" channel of the engine speed sensor 512 is sent to the "A" channel of the electronic protection unit 604A, and a low pressure spool speed signal N2_B from the "B" channel of the engine speed sensor 512 is sent to the "B" channel of the electronic protection unit 604B. The engine speed signals N2_A, N2_B may comprise digital signals in which the spool rotation speed is encoded, or analogue signals from which the spool rotation speed can be determined. The electronic protection unit 604 can then determine the propeller rotation speed using the known reduction ratio of the gearbox 306.

Correspondingly, proper operation of the electronic engine control unit 606 and the electronic engine protection unit 608 of the engine control and protection subsystem 510 relies on up-to-date information on the rotation speed of the low pressure spool 330.

The electronic engine control unit 606 uses the output from the engine speed sensor 512 to determine the rotation speed of the low pressure spool 330 and make engine control adjustments. A low pressure spool speed signal N2_A from the "A" channel of the engine speed sensor 512 is sent to the "A" channel of the electronic engine control unit 606A, and a low pressure spool speed signal N2_B from the "B" channel of the engine speed sensor 512 is sent to the "B" channel of the electronic engine control unit 606B. The engine speed signals N2_A, N2_B may comprise digital signals in which the spool rotation speed is encoded, or analogue signals from which the spool rotation speed can be determined.

In contrast, the electronic engine protection unit 608 uses the output from the propeller speed sensor 514 to determine the rotation speed of the low pressure spool 330 and make engine control adjustments if needed for protection reasons. A propeller speed signal NP_A from the "A" channel of the propeller speed sensor 514 is sent to the "A" channel of the electronic engine protection unit 608A, and a propeller speed signal NP_B from the "B" channel of the propeller speed sensor 514 is sent to the "B" channel of the electronic engine protection unit 608B. The propeller speed signals NP_A, NP_B may comprise digital signals in which the propeller rotation speed is encoded, or analogue signals from which the propeller rotation speed can be determined. The electronic engine protection unit 608 can then determine the low pressure spool rotation speed using the known reduction ratio of the gearbox 306.

Thus, the propeller propulsion system 500 uses just two speed sensors 512, 514 to provide sufficient input for redundant and independent pitch and engine control and protection units. This may allow for a reduction in part count, cost and weight of the propeller propulsion system 500.

The configuration of one propeller speed sensor 514 and one engine speed sensor 512 shown in Figure 5 is only one possible implementation of the present disclosure.

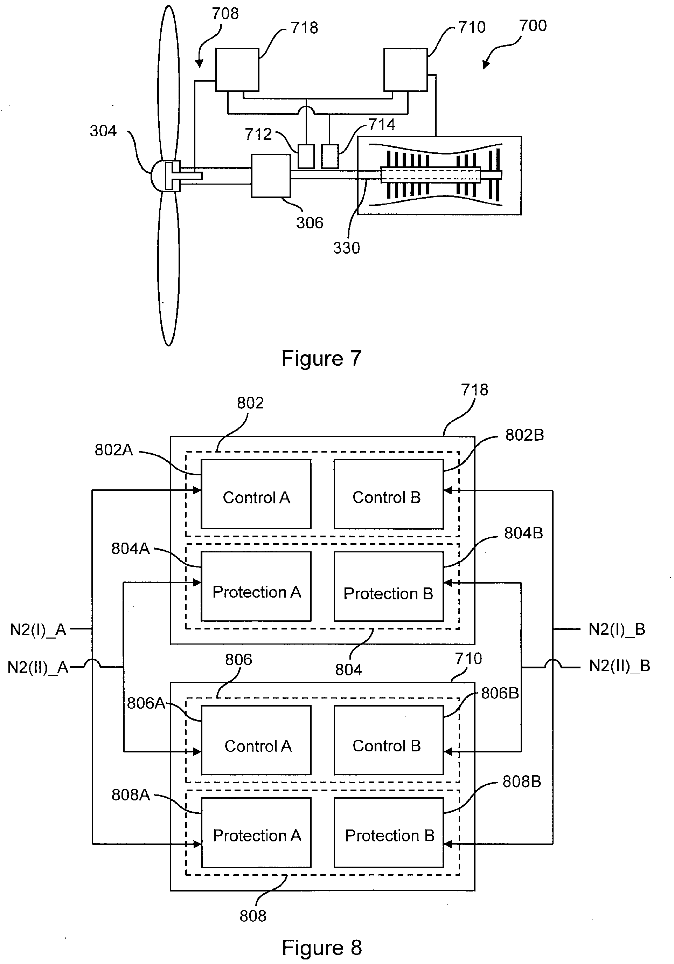

Figures 7 and 8 illustrate another propeller propulsion system 700 according to an example of the present disclosure. The propeller propulsion system 700 comprises many of the same components as the propeller propulsion system 500 described above. However, rather than featuring one engine speed sensor 512 and one , propeller speed sensor 514, the propeller propulsion system 700 comprises two engine speed sensors 712, 714, that are both configured to measure the rotation speed of the low pressure spool 330.

The propeller propulsion system 700 comprises a pitch adjustment subsystem 708 and an engine control subsystem 710. A controller 718 of the pitch adjustment subsystem 708 comprises an electronic control unit 802 and an electronic protection unit 804. The engine control subsystem 710 comprises an electronic engine control unit 806 and an electronic engine protection unit 808. The control and protection units 802, 804, 806, 808 all have two channels "A" and "B".

In this example, the electronic control unit 802 of the pitch adjustment controller 718 uses the output from the first engine speed sensor 712 to determine the rotation speed of the propeller 304 (using the known reduction ratio of the gearbox 306) and make appropriate pitch adjustments. A low pressure spool speed signal N2(I)_A from the "A" channel of the first engine speed sensor 712 is sent to the "A" channel of the electronic control unit 802A and a low pressure spool speed signal N2(I)_B from the "B" channel of the first engine speed sensor 712 is sent to the "B" channel of the electronic control unit 802B.

The electronic protection unit 804 uses the output from the second engine speed sensor 714 to determine the rotation speed of the propeller 304 (using the known reduction ratio of the gearbox 306) and make appropriate pitch adjustments if needed for protection reasons.

A low pressure spool speed signal N2(II)_A from the "A" channel of the second engine speed sensor 714 is sent to the "A" channel of the electronic protection unit 804A, and a low pressure spool speed signal N2(II)_B from the "B" channel of the second engine speed sensor 714 is sent to the "B" channel of the electronic protection unit 804B.

The electronic engine control unit 806 uses the output from the second engine speed sensor 714 to determine the rotation speed of the low pressure spool 330 and make engine control adjustments if needed for protection reasons. A low pressure spool speed signal N2(I)_A from the "A" channel of the engine speed sensor 714 is sent to the "A" channel of the electronic engine control unit 806A, and a low pressure spool speed signal N2(I)_B from the "B" channel of the engine speed sensor 714 is sent to the "B" channel of the electronic engine control unit 806B.

Finally, the electronic engine protection unit 808 uses the output from the first engine speed sensor 712 to determine the rotation speed of the low pressure spool 330 and make engine control adjustments if needed for protection reasons. A low pressure spool speed signal N2(I)_A from the "A" channel of the first engine speed sensor 712 is sent to the "A" channel of the electronic engine protection unit 808A, and a low pressure spool speed signal N2(I)_B from the "B" channel of the first engine speed sensor 712 is sent to the "B" channel of the electronic engine protection unit 808B.

Thus, in this example, just two engine speed sensors 712, 714 are needed to provide speed information to independent propeller and engine control and protection units 802, 804, 806, 808. The use of engine speed sensors 712, 714 may also provide more accurate speed information for both purposes.

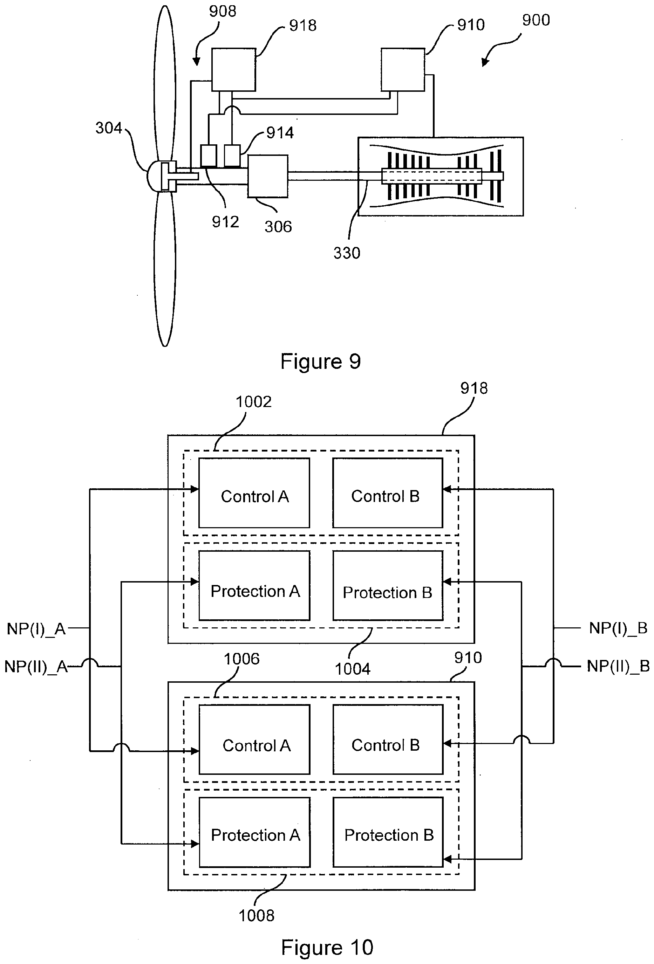

Figures 9 and 10 illustrate another propeller propulsion system 900 according to yet another example of the present disclosure. The propeller propulsion system 900 comprises many of the same components as the propeller propulsion systems 500, 700 described above. However, in this example, the propeller propulsion system 900 comprises two propeller speed sensors 912, 914, that are both configured to measure the rotation speed of the propeller 304.

The propeller propulsion system 900 comprises a pitch adjustment subsystem 908 and an engine control subsystem 910. A controller 918 of the pitch adjustment subsystem 908 comprises an electronic control unit 1002 and an electronic protection unit 1004. The engine control subsystem 910 comprises an electronic engine control unit 1006 and an electronic engine protection unit 1008.

The control and protection units 1002, 1004, 1006, 1008 all have two channels "A" and "B". Their operation is essentially the same as described above in relation to the other examples. However, in this example, the electronic control unit 1002 of the pitch adjustment controller 918 and the electronic engine control unit 1006 of the engine control subsystem 910 both use outputs NP(I)_A, NP(I)_B from the first propeller speed sensor 912 to determine the rotation speed of the propeller and the low pressure spool 330 respectively. The electronic protection unit 1004 and the engine protection unit 1008 use outputs NP(II)_A, NP(II)_B from the second propeller speed sensor 912 to determine the rotation speed of the propeller and the low pressure spool 330 respectively.

Thus, in this example, just two propeller speed sensors 912, 914 are needed to provide speed information to independent propeller and engine control and protection units 1002, 1004, 1006, 1008. The use of propeller speed sensors 912, 914 rather than engine sensors may lead to cost savings and/or increased convenience of installation and maintenance.

While the disclosure has been described in detail in connection with only a limited number of examples, it should be readily understood that the disclosure is not limited to such disclosed examples. Rather, the disclosure can be modified to incorporate any number of variations, alterations, substitutions or equivalent arrangements not heretofore described, but which are commensurate with the scope of the disclosure. Additionally, while various examples of the disclosure have been described, it is to be understood that aspects of the disclosure may include only some of the described examples. Accordingly, the disclosure is not to be seen as limited by the foregoing description, but is only limited by the scope of the appended claims.

## Claims

1. A propeller propulsion system comprising:
a prime mover comprising at least one spool;
a propeller arranged to be driven by the spool;
a pitch adjustment subsystem comprising an electronic control unit arranged to adjust a pitch of the propeller in normal operation and an electronic protection unit arranged to adjust the pitch of the propeller in response to one or more protection conditions;
a prime mover speed sensor arranged to detect a rotation speed of the spool; and
an additional speed sensor arranged to detect the rotation speed of the spool or arranged to detect a rotation speed of the propeller;
wherein a first of the electronic control unit and the electronic protection unit is arranged to use an output from the prime mover speed sensor to determine the rotation speed of the propeller;
and wherein a second of the electronic control unit and the electronic protection unit is arranged to use an output from the additional speed sensor to determine the rotation speed of the propeller.

2. The propeller propulsion system of claim 1, wherein the electronic control unit is arranged to adjust the pitch of the propeller based at least partially on the rotation speed of the propeller.

3. The propeller propulsion system of any preceding claim, wherein the electronic protection unit is arranged to adjust the pitch of the propeller according to one or more protection conditions relating to the rotation speed of the propeller.

4. The propeller propulsion system of any preceding claim, wherein the prime mover comprises a turbine engine.

5. The propeller propulsion system of claim 4, wherein the turbine engine comprises a low pressure spool and a high pressure spool, and the prime mover speed sensor is arranged to detect the rotation speed of the low pressure spool.

6. The propeller propulsion system of any preceding claim, comprising a prime mover control subsystem arranged to control one or more operational parameters of the prime mover, the prime mover control subsystem comprising an electronic prime mover control unit arranged to adjust one or more operational parameters of the prime mover in normal operation and an electronic prime mover protection unit arranged to adjust one or more operational parameters of the prime mover in response to one or more protection conditions;
wherein the prime mover control subsystem is arranged to control the prime mover based at least partially on the rotation speed of the spool.

7. The propeller propulsion system of claim 6, wherein the prime mover control subsystem and the pitch adjustment subsystem are arranged to share use of at least one speed sensor.

8. A propeller propulsion system comprising:
a prime mover comprising at least one spool;
a propeller arranged to be driven by the spool;
a prime mover control subsystem comprising an electronic prime mover control unit arranged to adjust one or more prime mover parameters in normal operation and an electronic prime mover protection unit arranged to adjust one or more prime mover parameters in response to one or more protection conditions;
a propeller speed sensor arranged to detect a rotation speed of the propeller; and ,
an additional speed sensor arranged to detect a rotation speed of the spool or the rotation speed of the propeller;
wherein a first of the electronic prime mover control unit and the electronic engine protection unit is arranged to use an output from the prime mover speed sensor to determine the rotation speed of the spool, and a second of the electronic prime mover control unit and the electronic prime mover
protection unit is arranged to use an output from the additional speed sensor to determine the rotation speed of the low pressure spool.

9. The propeller propulsion system of claim 8, comprising a pitch adjustment subsystem comprising an electronic control unit arranged to adjust a pitch of the propeller in normal operation and an electronic protection unit arranged to adjust the pitch of the propeller in response to one or more protection conditions.

10. The propeller propulsion system of any preceding claim, wherein the propeller is coupled to the spool by a speed reduction apparatus, so that the propeller is arranged to rotate at a lower speed than the spool.

11. The propeller propulsion system of any preceding claim, wherein one or more of the speed sensors comprises a magnetic pulse pick up sensor.

12. The propeller propulsion system of any preceding claim, wherein one or more of the speed sensors comprises a duplex sensor with two separate sensing channels.

13. An aircraft comprising one or more propeller propulsion systems as claimed in any preceding claim.
